# EUROPEAN PATENT APPLICATION

(11) **EP 2 784 644 A1**
(43) Date of publication of application: **01.10.2014**
(21) Application number: 14161406.5
(22) Date of filing: 25.03.2014
(51) Int. Cl.: G06F 3/0481

(54) **A method for cancelling a user action to be applied to a digital object**

(30) Priority: 27.03.2013 EP 13161223
(71) Applicant: Océ-Technologies B.V., 5914 CA Venlo (NL)
(72) Inventor: Hagens, Pascal A.M.S., 47623 Kevelaer (DE)
(74) Representative: van der Elsen, Jacobus Theodorus Henricus

(57) **Abstract**

The invention relates to a computer-implemented method for tracing a digital object on a user interface screen of an electronic system, the method comprising the steps of representing the digital object on the user interface screen by means of a first digital image, selecting the first digital image, starting a user action on the corresponding digital object, replacing the first digital image by a second digital image representing the interactive object during a predetermined time period, applying the user action on the digital object after the predetermined time period has lapsed, and removing the second digital image from the user interface screen after the predetermined time period has lapsed, wherein the second digital image is selectable in order to cancel the started user action of the digital object and to let emerge the first digital image again on the user interface screen.

The invention also relates to a reproduction apparatus comprising a user interface screen and a control unit for executing the method according to the invention.

## Description

The invention relates to a computer-implemented method for cancelling a user action to be applied to a digital object, on a user interface screen of an electronic system, the method comprising the steps of representing the digital object on the user interface screen by means of a first digital image, and receiving the user action via user input means, the user action to be applied on the digital object represented by the first digital image.

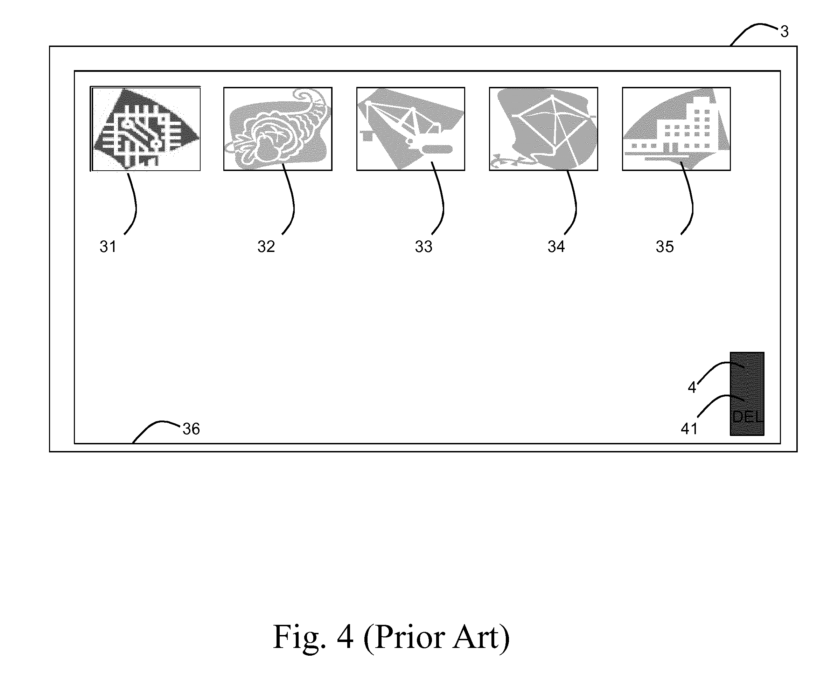

User interface screens are known which display a digital image which represents a digital object such as a document, a print job etc. Such a digital object is stored in a memory of the electronic system and may be selected by user input means like a mouse, a human finger, a stylus etc. The user interface screen usually comprises operable user interface elements, like action buttons for editing, copying, renaming, creating, viewing, printing, copying and deleting the digital object. Each operable user interface element represents a specific operation which is activated when a piece of underlying function code program is executed. When the first digital image is selected, the digital object corresponding to the first digital image may be suitable for applying an action upon the digital object. Such an application of an action may be executed by activating the corresponding action button or applying a gesture on the first digital image. Such a user interface screen is shown in Fig. 4. A user interface screen 3 displays a plurality of digital images 31 - 35 ordered in a list and an action button 4. The action button 4 comprises an icon 41 indicating that the action corresponding to the action button is a delete action. Firstly, a digital image of the plurality of digital images 31 - 35 has to be selected by pointing at, tapping at or pressing on the digital image and secondly the action button 4 has to be activated by pointing at, tapping at or pressing on the action button 4.

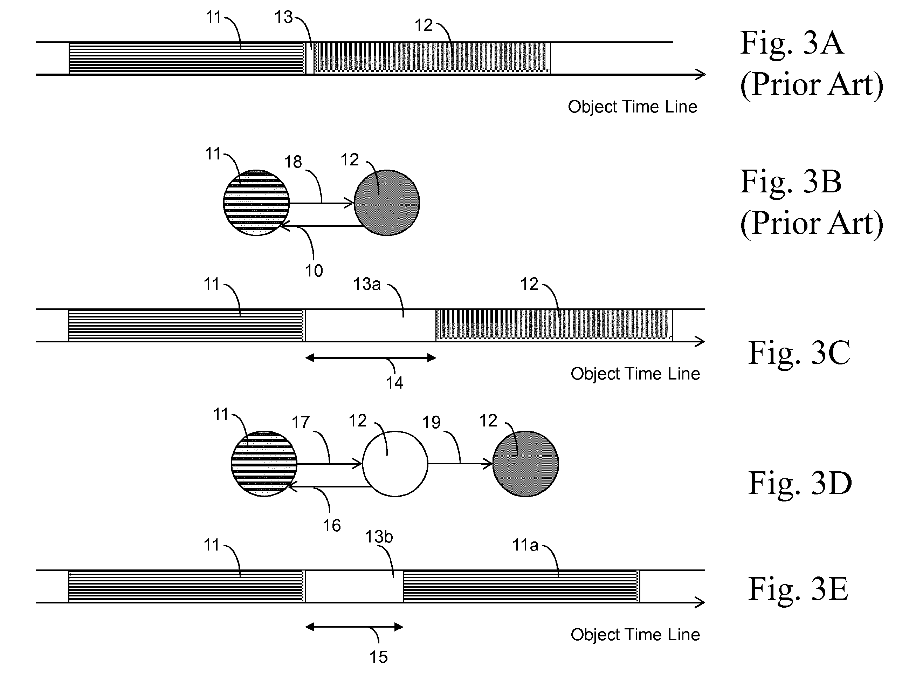

Fig. 3A shows an object time line according to the prior art. An object time line is a concatenation of state blocks of a digital object in time. The length of a state block determines the time period that the digital object in the state represented by the state block. Fig. 3A shows a first state 11 of a digital object followed by a second state 12 of the digital object. A change from the first state 11 to the second state 12 may be a result of a user action, for example an edit action, a copy action, a rename action, print action, delete action or view action, on the digital object. Between the first state 11 and the second state 12 the electronic system needs a small amount of time 13 to establish the transition from the first state 11 to the second state 12. This amount of time 13 is so small that the transition from the first state 11 to the second state 12 is almost instantaneously. On the user interface screen the digital object is represented by a digital image being selectable by the user during the time period of the first state 11.

Fig. 3B shows a state diagram according to the prior art. The first state 11 of the digital object transfers into the second state 12 of the digital object by means of a transfer function 18 invoked by a user action, for example a delete action. Some transfer functions are reversible and an undo function 10 from the second state 12 back to the first state 11 may be implemented.

It is an objective of the invention to improve the cancellation of a user action upon a digital object.

According to the present invention, this object is achieved by the method according to the preamble wherein the method comprises the further steps of replacing the first digital image by a second digital image representing the digital object during a predetermined time period, if the second digital image is selected during the predetermined time period, cancelling the received user action, and displaying the first digital image again instead of the second digital image, if the second digital image is not selected during the predetermined time period, applying the user action to the digital object after the predetermined time period has lapsed, and removing the second digital image after the predetermined time period has lapsed.

By executing the steps according to the method, the user action of a digital object is not abrupt and irreversible. The second digital image represents the digital object which is in a state between a first state before the user action is applied on the digital object and a second state after the user action is applied on the digital object. The duration of this in-between state is at most the predetermined time period and begins at the start of the user action. If within this predetermined time period the user selects the second digital image, the state of the digital object becomes the first state again and the first digital image replaces the second digital image. Since the second digital image replaces the first digital image, the user does not have to navigate to another window on the user interface screen for cancelling the planned user action. If within the predetermined time period the user does not select the second digital image, the user action is applied to the digital object after the predetermined time period is lapsed and the second digital image is removed from the user interface screen immediately.

According to an embodiment the predetermined time period is in the order of seconds. Within a number seconds which is for example less than 5, 10, 20 or 30, the user is able to decide that he wants to cancel the user action. He has realised that the planned user action was not wise and should be cancelled. In particular, it happens that users invoke a user action and at the moment they invoke the action, they realise that this is a mistake and that the action should be cancelled. Due to the method of the invention the user is able to cancel immediately after invoking the user action by selecting the second digital image.

According to an embodiment the second digital image is placed at substantially the same location on the user interface screen as previously the first digital image. This is advantageous, since the user immediately becomes aware of the fact that the second digital image represents the same digital object as the first digital image, when looking at the same location on the user interface screen.

According to an embodiment the second digital image is different from the first digital image with respect to at least one characteristic of the first digital image. A difference between the first digital image and the second digital image may be an image colour, a colour of the background, a colour of the foreground, a brilliance degree, a sharpness degree, a patterned image, a watermarked image, a written-over image or a shrunk image. The second digital image may be derived from the first digital image and may comprise an additional image part. By doing so, the user is able to easily distinguish the first digital image from the second digital image. The additional image part may comprise information for the user regarding the invoked cancelling of the user action.

According to an embodiment of the method the second image comprises at least a part which is variable and reflects to the amount of time left of the predetermined time period. At least a part of the second digital image or the whole second digital image may change of appearance as the time of the predetermined period is passing. The change of appearance gives the user an indication how long it will take till the user action is actually applied upon the selected digital object and how much time is left to cancel the planned user action on the digital object by touching or selecting the second digital image.

According to a further embodiment of the method the variable part of the second image comprises a text item representing the amount of time left of the predetermined time period.. This variable part of text gives the user an indication how long it will take till the user action is actually applied upon the selected digital object and how much time is left to cancel the planned user action on the digital object by touching or selecting the second digital image.

According to a further embodiment of the method the variable part comprises a progress item indicating the amount of time left of the predetermined time period. The progress item gives the user an indication how long it will take till the planned user action is actually applied upon the selected digital object and how much time is left to cancel the planned user action on the digital object by touching or selecting the second digital image.

According to a further embodiment of the method the second image changes colour with respect to the amount of time left of the predetermined time period. The colour change gives the user an indication how long it will take till the planned user action is actually applied upon the selected digital object and how much time is left to cancel the planned user action on the digital object by touching or selecting the second digital image.

The invention also relates to a control unit for controlling a user interface screen connected to the control unit, the user interface screen suitable for displaying a first digital image representing a digital object, and an operable user interface element suitable for applying a user action to the digital object, receiving means for receiving a user selection of the first digital image, selection means for selecting the digital object upon a receipt of a user selection of the first digital image, wherein the control unit is programmed to cause the user interface screen to display a second digital image replacing the first digital image as soon as the user action is invoked, said second digital image being selectable during a predetermined time period in such a way that, when selected, the user action is cancelled and the second digital image is replaced by the first digital image, and, when not selected, the user action is applied and the second digital image is removed. The control unit may be embedded in a mobile device, like a laptop, a mobile phone, a smart phone, e-reader, i-pad, etc.

The invention also relates to an image reproduction apparatus comprising a control unit according to claim 11, wherein the user action is one of a delete action, a copy action, a rename action and a view action.

The invention also relates to an image reproduction apparatus comprising a control unit according to claim 11 and a reproduction engine for applying the user action to the digital object, wherein the user action comprise a print action applicable upon the digital object which is one of a print job and a document.

The invention also relates to a computer program product that, when executed on a processor, performs a method according to the invention. The invention also relates to a recording medium comprising the computer program product according to the invention.

The method, the control unit and the electronic system will be explained in greater detail with reference to the accompanying drawings wherein:
Fig. 1A- 1B are diagrams each showing a configuration of an electronic system according to the invention,
Fig. 2 shows a configuration of an electronic system as an image reproduction system according to the invention,
Fig. 3C - 3E shows object time lines and state diagrams according to the present invention,
Fig. 4 shows a user interface screen displaying a plurality of digital images according to the prior art,
Fig. 5 - 8 show user interface screens displaying the plurality of digital images according to the invention, and
Fig. 9 shows a flow diagram of a method according to the invention.

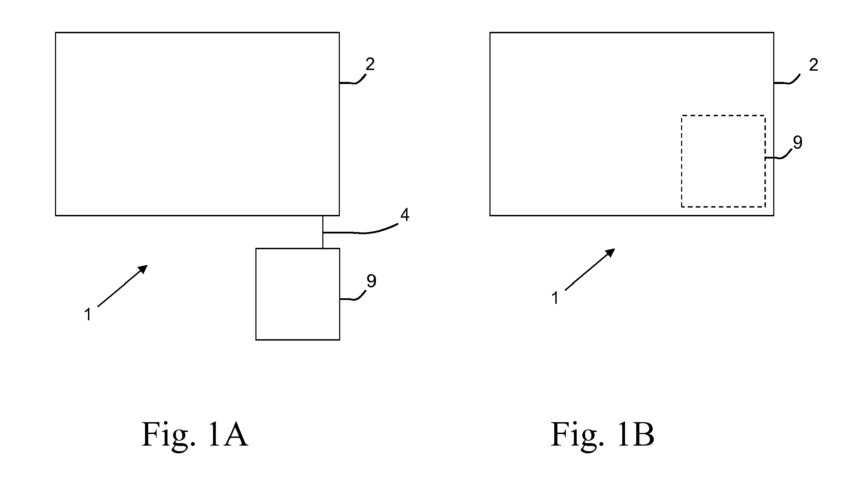

Fig. 1A - 1B show an electronic system 1 comprising a user interface screen 2 connected to a control means 9, e.g. a computer system with processor and memory and user interface touch screen, or an image reproduction system like a printer with a local user interface screen. The control means 9 may be integrated with the user interface screen 2 in a single holding as shown in Fig. 1B. The user interface screen 2 may be a touch screen. The control means 9 may be connected to the user interface screen 2 by a connection 4 which may be wired or wireless as shown in Fig. 1A. The electronic system 1 may be a e-reader, a tablet personal computer, a phone, a smart phone, a laptop, a notebook, a desktop computer, an intelligent white or black board or any other electronic system provided with a user interface screen suitable for user input.

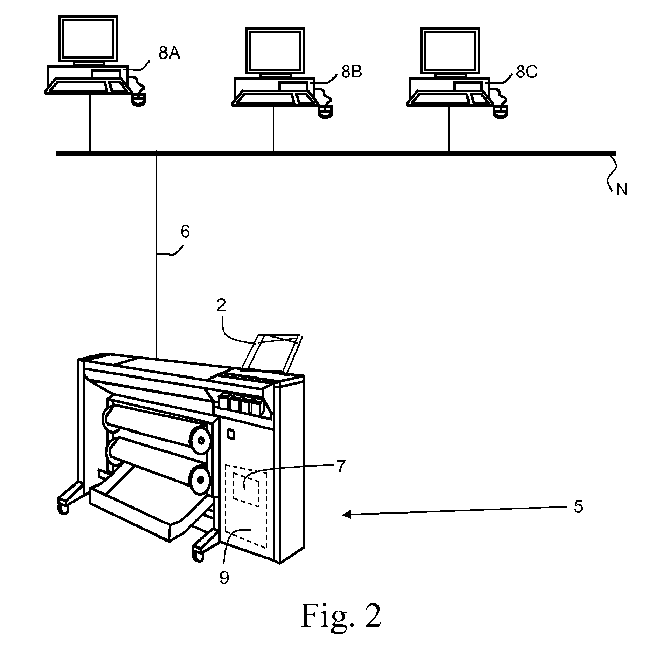

Fig. 2 shows the electronic system integrated in an image reproduction system 5, for example a printer, a copier, a scanner, a multifunctional printer, a small format printer, a wide format printer, inkjet printer, electro-photographical printer, a printer for printing a three-dimensional object etc. The invention is particularly suited for use in this kind of environment, where the image reproduction system 5 is available via a network connection 6 for a user working with workstations 8A, 8B, 8C which are connected via a network N. The user may send a print job comprising a set of digital items from the workstation 8A, 8B, 8C to the control means 9 of the image reproduction system 5. The control means 9 comprises a storage means 7 for storing print jobs, however storage means for storing print jobs, documents or images may also be provided by an external system like a web server, a cloud service or an external server which is connected via a network to the control means 9. The display means 2 acts as a user interface screen and is suitable for displaying a digital object like a thumb nail, an icon, a text item etc. in order to represent a digital item like an electronic document, an image, a print job, a user print mail box etc.

The control means 3 may be suited to queue print jobs, to check whether or not the print queue is empty and to submit a document from a queued print job to the print engine of the image reproduction system 5 in order to be printed. The control means 9 may comprise storage means 7 for storing digital items, for example documents of a print job. When a print job arrives at the image reproduction system 5 according to Fig. 2, it is stored in the control means 9.

Fig. 3C shows an object time line according to the present invention. An object time line, being a concatenation of state blocks of a digital object in time, is shown. Fig. 3B shows the first state 11 of the digital object and the second state 12 of the digital object. A user action is the cause of the change of state from the first state 11 to the second state 12. Between the first state 11 and the second state 12 a transition state 13a is positioned on the object time line. The transition from the first state 11 to the second state 12 is made longer in time by means of the transition state 13a. However, the user action which will cause the digital object to get the second state 12 will be executed at the end of the time period of the transition state 13a. The time amount of the transition state 13 is large enough to facilitate an extra user action on the digital object before the digital object goes into the second state 12. During the transition state no action is running on the digital object, i.e. the digital object is left on its own. During the transition state 13a the digital object is represented by another digital image than the digital image representing the digital object during the first state 11. The appearance of the other digital image may change during the time period of the transition state 13a.

A user action which is allowed in this transition state 13a, is a user action on the digital object of reverting the digital object from the transition state 13a into the first state 11. If no user action is invoked on the digital object during the time period of the transition state 13a, the user action is performed on the digital object and the digital object goes into the second state 12 after a predetermined time period 14.

The use of the transition state 13a is in particular useful when the user action is irreversible, like a delete action in a trash mail box. During the transition state 13a the user may come to the insight that his action was not wise. Then he is still able to revert the digital object into the first state 11. A permanent delete of the digital object may be for example prevented. The state diagram is different from an undo action. An undo action is executed upon a second state 12 after the user has invoked a user action upon the digital object in the first state 11. The digital object is already in the second state 12 when the user decides to undo the user action. Such an undo action will not work and probably will not be offered in the user interface screen when the user action is irreversible. According to the method of the present invention the user action does not have to be undone, because the user action has not yet been executed when the digital object is in the transition state 13a.

Furthermore an undo action works in a chain of previous actions. If more than one digital object is in a transition state, it is not possible to arbitrary select a digital object for an undo action, since the last action of the user on a specific digital object is the only action that can be made undone at one moment in time. According to the invention each digital object in a transition state can be reverted to its original first state during the transition state of the digital object by touching or selecting on the user interface screen the digital image corresponding to the transition state of the digital object. Overlapping transition states of a plurality of digital objects can be handled in an arbitrary order by selecting the corresponding second digital images in that arbitrary order.

Fig. 3D shows a state diagram according to the present invention. Initially the digital object is in a first state 11 and after a user action is invoked the digital object transfers via transfer function 17 to a transition state 13a. After lapse of the predetermined time 14 (See Fig. 3C) the user action is effectuated and a transfer function 19 delivers the digital object in the second state 12. From the transition state 13a the digital object may be reverted into the first state 11 by means of a transfer function 16 if the user intervenes during the predetermined time period 14 (See Fig. 3C) with a specific reversion action on the digital object in order to get the digital object in its first state 11 again..

Fig. 3E shows an object time line according to the present invention. The user has invoked a user action to transfer the digital object from the first state 11 into the second state 12 and the digital object resides in the transition state 13a (See Fig. 3D). Before the lapse of the predetermined time period 14 (See Fig. 3C), the user decides to revert the digital object to the first state 11, for example after a time period 15 in the transition state 13a. The time period 15 is smaller than the time period 14. The decision of the user is executed by selecting or touching the digital image corresponding to the transition state 13a on the user interface screen.

In another embodiment (not shown) another user action on the digital object is a jump in time to the second state 12 by skipping a part of the time period of the transition state. In this case the jump is immediately following by the performance of the user action on the digital object which immediately goes into the second state 12.

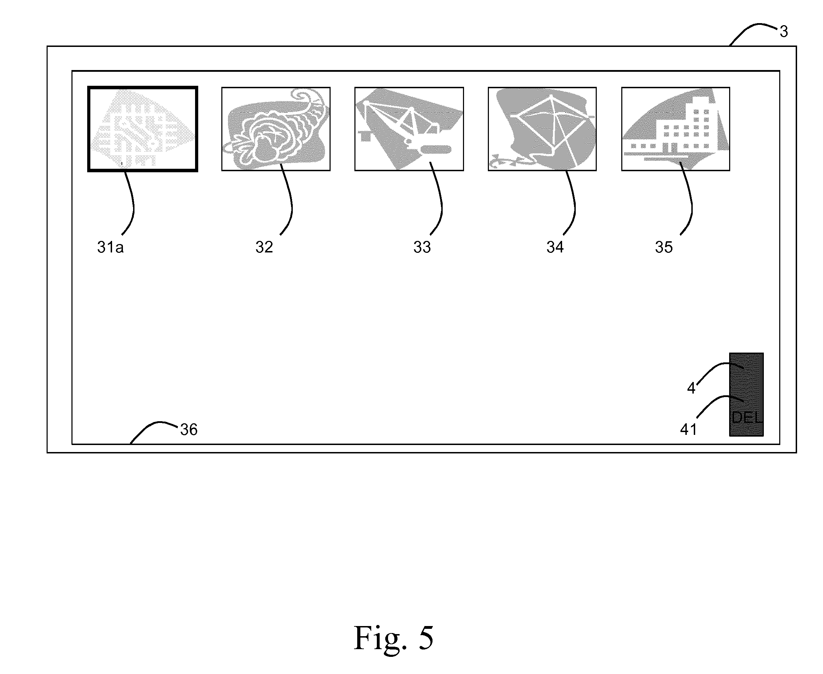

Fig. 5 shows an embodiment of a user interface screen 3 according to the invention displaying at least one digital image 31 - 35 according to the invention. The digital images 31 - 35 are arbitrarily situated on the user interface screen 3, but may be displayed in a regular order, e.g. in a line up in a vertical or horizontal direction. Each of the digital images 31 - 35 represents a digital object located in memory of the electronic system or on an external storage connected to the electronic system. The memory of the electronic system comprises also at least one function code program to be invoked when applying a corresponding action on a digital object which a corresponding digital image 31 - 35 is selected on the user interface screen 3. The digital images are shown in a schematic way as a rectangle and are filled with a picture. The picture of the first digital image 31 shows a part of a circuit and is dark (blue) coloured. Also metadata of the digital object may be included in the digital image 31 - 35. For example, digital image 31 may be provided with metadata text comprising the text "electronic circuit part". If the corresponding digital object is a document file, the digital image may be a thumbnail of a first page of the document. Metadata of the digital object may be a file name, a file extension, a corresponding thumbnail, creation date or modification date of the digital object, the user or the owner of the digital object and/or a byte size of the digital object in memory. The user interface screen 3 also displays an operable user interface element 4 in the right lower corner of the user interface screen 3. Other positions of the operable user interface element are envisioned. The operable user interface element 4 may be displayed adjacent to a digital image 31 - 35 which is determined by determination criteria programmed in the control means. Examples of criteria are the last used digital object, last selected digital object, last printed digital object, the most left digital image, the most right digital image, the uppermost digital image, or the lowermost digital image on the user interface screen.

In Fig. 5 the operable user interface element 4 is provided with an icon 41 indicating that the function code program in memory corresponding to the operable user interface element 41 is a delete action. The user interface element 4 may be easily distinguishable by its colour, for example a red colour. The delete action may also be implemented to be in a list of actions applicable to the digital object corresponding to the digital image. Such a list may appear after a right mouse click at or a long touch on - in case of a touch screen - the appropriate digital image on the user interface screen.

In case that the user interface screen comprises a touch screen the user action on a digital object may be invoked by an appropriate gesture on the corresponding digital image instead of using a selection of the digital image in combination with an activation of an operable user interface element.

In Fig. 5 the first digital image 31 is selected which is indicated by the thick rectangle around the digital image 31 as is also the case in Fig. 4. Other ways of showing a selected digital object and corresponding selected digital image are envisioned and are within the scope of the present invention.

Fig. 5 shows the user interface screen 3 after the user has pressed the operable user interface element 4 in Fig. 4. A delete action is planned but postponed: the actual deleting of the digital object is not yet started. According to the invention the digital object corresponding to the selected digital image 31 (Fig. 4) is in a transition state between the first state and the second state. This is shown according to the invention by replacing the corresponding digital image 31 (Fig. 4) by a second digital image 31 a (Fig. 5). The second digital image 31a is light coloured instead of the dark coloured first digital image 31. Other ways of representing the second digital image different from the first digital image are envisioned. The second digital image may be watermarked or written over by an image of a coloured cross. The second digital image may be shrunk with regard to the first digital image. Depending on the duration of the predetermined time period of the transition state, the second digital image 31 a may fade away, for example by showing respectively a dark coloured image, a light coloured image and a very light coloured image. In another embodiment the digital image 31 is fading away into the background of the user interface screen during the predetermined time period.

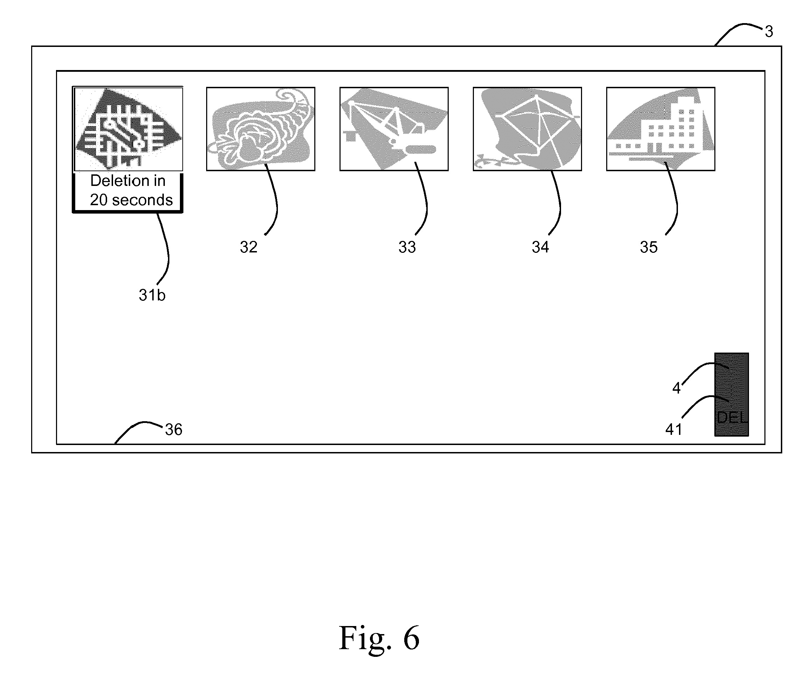

Fig. 6 shows another embodiment of the method by using a variable image part 31 b additional to the second image. The additional part 31 b comprises a text item representing the amount of time left till the lapse of the predetermined time period. In an alternative embodiment the variable image part is incorporated into the second digital image. Part 31 b contains the text which indicates the planned user action and the time period still to go until the user action is actually executed, namely "deletion in 20 seconds". The number "20" in the text is variable from a start number of seconds - in Fig. 6 20 seconds is the starting number in the text - to 0 seconds in steps of a predetermined number of seconds, for example 1 second or more. The user is able to see how much time is left before a real deletion of the digital object. The user is also able to see how much time is left to cancel the planned delete action on the digital object.

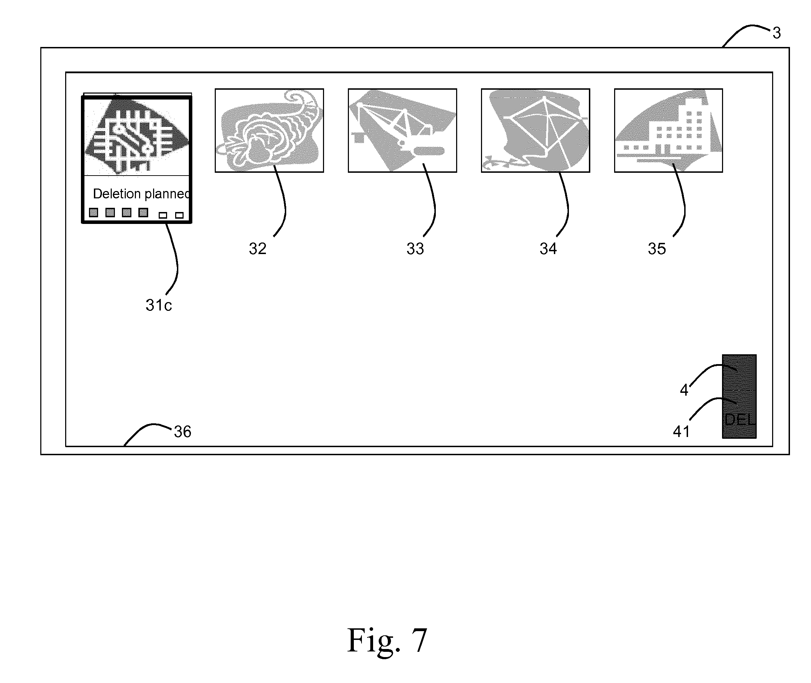

Fig. 7 shows another embodiment of the method by using a variable image part 31 c additional to the second image. The additional part 31 c comprises an image of small objects, for example squares, representing the amount of time left till the lapse of the predetermined time period. The coloured objects dynamically represent the time that has passed and the uncoloured objects dynamically represent the time left till the actual delete action. Each object may represent one second or two seconds or three seconds etc. Other visual items, like time bars, progress bars are envisioned and are within the scope of the invention.

The embodiments shown in Fig. 5, Fig. 6 and Fig. 7 may be combined in one way or another. Such combinations are within the scope of the invention.

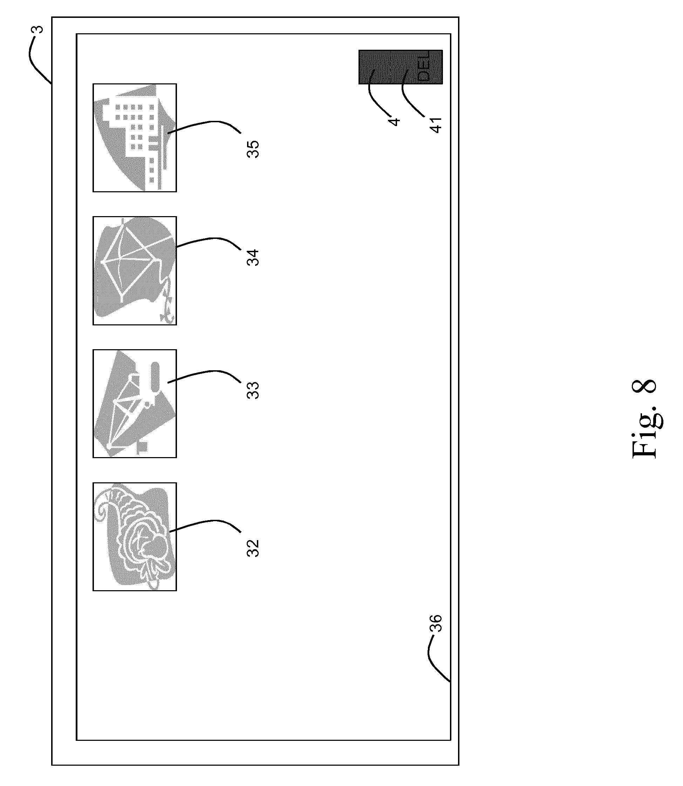

Fig. 8 shows the user interface screen 3 after the predetermined time period of 20 seconds has lapsed. In this case the user has not touched or selected the second digital image 31 a, 31 b, 31 c. In this case the second digital image is disappeared from the user interface screen on which now the remaining digital images 32 - 35 are shown. The digital object corresponding to the previous second digital image 31 has been deleted from memory.

In case the user did actually touch or select the second digital image 31 a, 31 b, 31 c during the predetermined time period - in this example 20 seconds - the user interface screen 3 returns to the state as shown in Fig. 4. The digital object corresponding to the second digital image 31 a, 31 b, 31 c is not deleted from memory and the first digital image 31 will appear again on the user interface screen 3.

Besides a delete action other user actions may be envisioned, like a print action, a rename action, a change action, a view action, a revert action, a load action, a create action. Such other user actions fall within the scope of the invention.

The digital object may be a digital image, a digital document, a print job, a copy job, a user mailbox, a directory in a filing system etc.

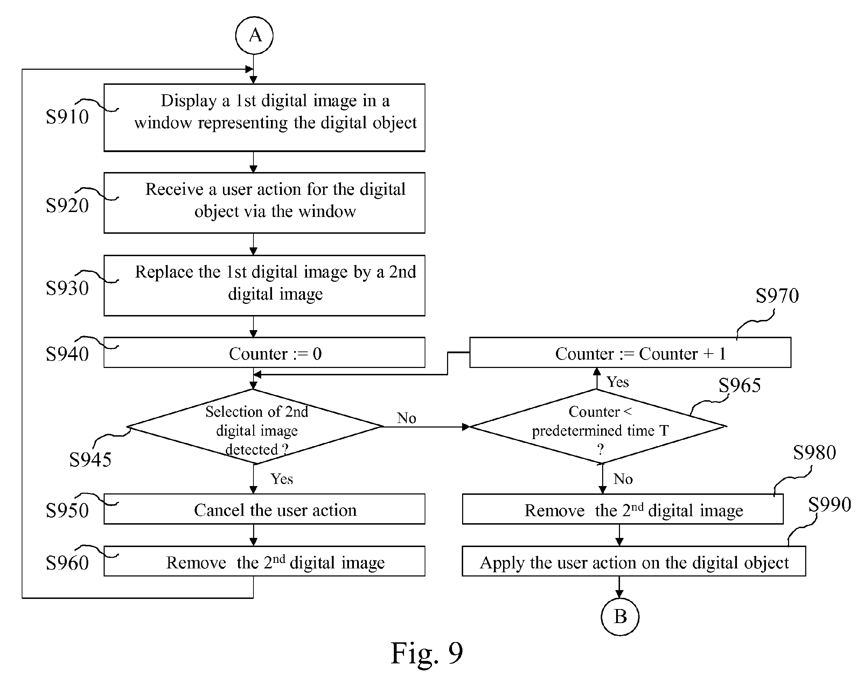

Fig. 9 shows a flow diagram of the method according to the invention.

In a first step S910 a first digital image is displayed on the user interface screen in order to represent a corresponding digital object which resides in memory of the electronic system.

In a second step S920 a user action applicable to the digital object is received by the electronic system. The receipt may be after a selection of the first digital image and an activating an action button on the user interface screen or after a detection of a user action gesture on the first digital image in case of a touch screen .

In a third step S930 the first digital object is replaced by a second digital object on the user interface screen.

In a fourth step S940 a counter mechanism is introduced. A counter is initialized to zero.

In a fifth step S945 it is checked if the second digital image is selected by the user via a click or touch of the second digital image.

If the check in the fifth step S945 is positive, a sixth step S950 cancels the user action planned for the digital object.

In a seventh step S960 the second digital image is removed from the user interface screen and the method proceeds to the first step S910.

If the check in the fifth step S945 is negative, an eighth step S965 checks if the counter is less than a time T which is predetermined by the electronic system and is the maximal time of appearance of the second digital image on the user interface screen. The predetermined time T is in accordance with the counter mechanism in the electronic system.

If the check in the eighth step S965 is positive, the counter is incremented with 1 in a ninth step S970 and the method proceeds with the fifth step S945.

If the check in the eighth step S965 is negative, the second digital image is removed from the user interface screen in a tenth step S980. In an eleventh step S990 the user action is applied on the digital object and the method ends in an end point B. Depending on the user action, the method may have an extra step (not shown) after end pint B of displaying the first digital image again on the user interface screen. For example, in the case that the user action is a print action and reprinting is available in the electronic system, the second digital image may be removed from the user interface screen and be replaced by the first digital image on the user interface screen. If the user action is a delete action the second digital image is removed in the tenth step S980 and the digital object is deleted from memory and the method ends in the end point B.

All foregoing described embodiments are suitable to be combined with or to be incorporated in the steps S910 - S990 of the flow diagram of Fig. 9. The method may be adapted in an appropriate way in order to be applied to a plurality of digital objects displayed on the user interface screen whereby a multi-selection on the plurality of digital objects is envisioned.

It may be clear to the skilled person that the various embodiments of the method may be combined in one way or another in order to establish an appropriate and applicable embodiment of the method according to the invention.

## Claims

1. Computer-implemented method for cancelling a user action to be applied to a digital object, on a user interface screen of an electronic system, the method comprising the steps of
- representing the digital object on the user interface screen by means of a first digital image,
- receiving the user action via user input means, the user action to be applied on the digital object represented by the first digital image,
- replacing the first digital image by a second digital image representing the digital object during a predetermined time period,
- if the second digital image is selected during the predetermined time period, cancelling the received user action, and
displaying the first digital image again instead of the second digital image,
- if the second digital image is not selected during the predetermined time period, applying the user action to the digital object after the predetermined time period has lapsed, and
removing the second digital image after the predetermined time period has lapsed.

2. Method according to claim 1, wherein the step of cancelling the received user action is before the received user action is executed.

3. Method according to claim 1, wherein the predetermined time period is in the order of seconds.

4. Method according to claim 1, wherein the predetermined time period is in the less than 5, 10, 20 or 30 seconds.

5. Method according to claim 1, wherein the second digital image is at substantially the same location on the user interface screen as previously the first digital image.

6. Method according to claim 1, wherein the second digital image is different from the first digital image with respect to at least one characteristic of the first digital image.

7. Method according to claim 1, wherein the second image comprises at least a part which is variable and reflects the amount of time left of the predetermined time period.

8. Method according to claim 7, wherein the variable part of the second image comprises a text item representing the amount of time left of the predetermined time period.

9. Method according to claim 7, wherein the variable part comprises a progress item indicating the amount of time left of the predetermined time period.

10. Method according to claim 1, wherein the second digital image changes colour with respect to the amount of time left of the predetermined time period.

11. Method according to claim 1, wherein the user action is one of a delete action, a copy action, a print action, a scan action, a rename action and a view action.

12. Control unit for controlling a user interface screen connected to the control unit, the user interface screen suitable for displaying a first digital image representing a digital object, and an operable user interface element suitable for applying a user action to the digital object, receiving means for receiving a user selection of the first digital image, selection means for selecting the digital object upon a receipt of a user selection of the first digital image, wherein the control unit is programmed to cause the user interface screen to display a second digital image replacing the first digital image as soon as the user action is invoked, said second digital image being selectable during a predetermined time period in such a way that, when selected, the user action is cancelled before the user action is executed and the second digital image is replaced by the first digital image, and, when not selected, the user action is applied and the second digital image is removed.

13. Image reproduction apparatus comprising a control unit according to claim 12, wherein the user action is one of a delete action, a copy action, a print action, a scan action, a rename action and a view action.

14. Image reproduction apparatus comprising a control unit according to claim 12 and a reproduction engine for applying the user action to the digital object, wherein the user action comprises a print action applicable upon the digital object which is one of a print job and a document.

15. Computer program product that, when executed on a processor, performs a method according to claim 1.

16. Recording medium comprising the computer program product according to claim 15.
